# EUROPEAN PATENT APPLICATION

(11) **EP 1 541 668 A1**
(43) Date of publication of application: **15.06.2005**
(21) Application number: 02736134.4
(22) Date of filing: 17.06.2002
(51) Int. Cl.: C12M 1/00, C12N 15/09, C12Q 1/68, G01N 35/02, B01J 19/00

(54) **REACTION VESSEL AND REACTION PRODUCT EXTRACTING DEVICE**

(71) Applicant: PRECISION SYSTEM SCIENCE CO., LTD., Matsudo-shi, Chiba, 271-0064 (JP)
(72) Inventor: TAJIMA, H.; c/o Precision System Science Co., Ltd, Matsudo-shi, Chiba 271-0064 (JP); ASANO, T.; c/o Precision System Science Co., Ltd, Matsudo-shi, Chiba 271-0064 (JP)
(74) Representative: Bohnenberger, Johannes, Dr.
(86) International application number: PCT/JP2002/006021
(87) International publication number: WO 2003/106612

(57) **Abstract**

An object is to provide a reaction vessel in which, after a reaction has been conducted in the state with a cover member mounted on a reaction vessel main body, the reaction product contained in the reaction solution within the reaction vessel can be acquired without removing the cover member from the reaction vessel main body, and in order to achieve this object, the reaction vessel of the present invention is **characterized in that**: a nozzle tip fitting space, in which a nozzle tip mounted on a nozzle that can take in and discharge liquid can be fitted, is formed in the cover member; a nozzle tip fitting hole leading to the nozzle tip space is formed such that the nozzle tip can be fitted in the nozzle tip fitting space in the state with the cover member mounted on the reaction vessel main body; and in the state with the cover member mounted on the reaction vessel main body, a through-hole, which causes the exterior of the reaction vessel to communicate with the reaction solution holding space and the nozzle tip fitting space, can be formed in the reaction vessel main body and the cover member by a puncture needle provided exterior to the reaction vessel.

## Description

### TECHNICAL FIELD

The present invention relates to a reaction vessel and a reaction product extracting apparatus wherein after a reaction is conducted in a state in which a cover member is mounted on a reaction vessel main body, a reaction product contained in the reaction solution within the reaction vessel can be acquired without removing the cover member from the reaction vessel main body. Moreover, the present invention relates to a nozzle tip and puncture vessel that can be used when acquiring the reaction product contained in the reaction solution within the reaction vessel.

### BACKGROUND ART

A polymerase chain reaction (hereafter referred to as "PCR") is a technique which amplifies target nucleic acids by raising and lowering the temperature of a heat-resistant polymerase and primers. This technique is widely used in fields such as genetic engineering and biological test methods and detection methods.

The principle behind PCR lies in the fact that target DNA is amplified in a geometrical progression by numerous iterations of a cycle according to a thermal profile (rise and fall of temperature) that is set in three stages: a first stage in which the temperature is maintained at a level at which double-stranded DNA containing a target DNA sequence dissociates into a single strand, a second stage in which the temperature is maintained at a level at which forward and reverse primers are annealed with the dissociated single-stranded DNA, and a third stage in which the temperature is maintained at a level at which a complementary DNA chain is synthesized with the single-stranded DNA by the DNA polymerase.

For example, a PCR can be conducted by reacting a reaction solution containing double-stranded DNA that includes a target DNA sequence, an excess amount of a pair of primers, and a heat-resistant polymerase for 30 to 40 cycles, with each cycle comprising 30 seconds at 95°C, 30 seconds at 65°C, and 1 minute at 72°C. At 95°C, the double-stranded DNA dissociates into single-stranded DNA. Next, the reaction solution is cooled to an appropriate temperature as dictated by the base sequences of the primers (65°C in the above example), whereupon the primers and the single-stranded DNA are annealed. The temperature is then raised to the reaction temperature of the polymerase (72°C in the above example), whereupon a DNA synthesis reaction proceeds under the influence of the polymerase.

Thus, controlling the temperature of the reaction solution is important in a PCR, so a PCR is usually conducted using a thermostat apparatus that allows programming of the temperature control, and a reaction vessel that can be used with such an apparatus.

The most common approach is to use an apparatus in which micro-tubes are snugly fitted in holes of a metal block equipped with a heating/cooling apparatus, and a cycle of heating (dissociation of the double-stranded DNA), cooling (annealing of the primers), and heating (chain extension reaction by the polymerase) is repeated for the reaction solution in the micro-tubes via the metal block. Two different systems are employed for cooling the metal block: using a compressor, and using a Peltier cooling system. Recently, apparatuses have also been available in which the micro-tubes are moved together in their rack, rather than using a metal block, and in which the micro-tubes are successively immersed in three liquid-phase or solid-phase incubators with independent temperatures, so that a cycle consisting of heating (dissociation of the double-stranded DNA), cooling (annealing of the primers), and heating (chain extension reaction by the polymerase) is repeated.

If a large number of specimens is involved, in order to process numerous specimens all at once, as when a PCR is conducted for the purpose of screening, apparatuses have been developed with which PCRs for 96 specimens can be conducted at the same time using a PCR micro-titer plate (96 wells).

In particular, there has been a growing need for the efficient processing of numerous specimens in parallel by automating a series of operations comprising the preparation of samples containing target nucleic acids (such as extraction of nucleic acids from cells), amplification of these target nucleic acids by PCR, and monitoring of the progress of the PCR (such as whether or not the target nucleic acids have been amplified, or the amount of PCR amplification product), in order to treat numerous specimens more efficiently in genetic diagnosis and the genome project. If this series of operation is to be automated and numerous specimens are to be efficiently processed in parallel, it is necessary first of all to minimize the time PCR takes, secondly to minimize the quantity of specimen required for a PCR, and thirdly to monitor the progress of the PCR in real time (that is, instantly during the course of the PCR).

### DISCLOSURE OF THE INVENTION

Nonetheless, even when using any PCR reaction apparatus and PCR reaction vessel, in order to prevent terminating the reaction by vaporization of the solvent (normally water) in the reaction solution midway through PCR, it is necessary to mount a cover member on the reaction vessel main body that holds the reaction solution, and to tightly seal the interior of the reaction chamber (for example, micro-tube, well of micro-titer plate) in which PCR proceeds. Consequently, in PCR reaction apparatuses and PCR reaction vessels of the past, once the cover member had to be removed from the reaction vessel main body in order to acquire the amplification fragments obtained by PCR, automation of the operations from amplification of the target nucleic acid by PCR up to the acquisition of the amplification fragments became difficult.

Thus, an object of the present invention is to provide a reaction vessel and reaction product extracting apparatus that after a reaction in the state of a cover member being mounted on the reaction vessel main body, the reaction product contained in the reaction solution within the reaction vessel can be acquired without removing the cover member from the reaction vessel main body. Moreover, an object of the present invention is to provide a nozzle tip and puncture vessel that can be utilized when acquiring a reaction product contained in the reaction solution within a reaction vessel without removing the cover member from the reaction vessel main body.

In order to achieve the aforementioned objects, the reaction vessel of the present invention is a reaction vessel comprising a reaction vessel main body in which are formed a reaction solution holding space that can hold a reaction solution and an opening part leading to the reaction solution holding space, and a cover member that can tightly close the reaction solution holding space by sealing the opening part, wherein a nozzle tip fitting space in which can be fit a nozzle tip mounted on a nozzle capable of taking in and discharging liquid, is formed in the cover member, a nozzle tip fitting hole leading to the nozzle tip fitting space is formed in the cover member so as to fit the nozzle tip in the nozzle tip fitting space in the state of the cover member being mounted on the reaction vessel main body, and a through-hole that causes the exterior of the reaction vessel to communicate with the reaction solution holding space and the nozzle tip fitting space can be formed in the reaction vessel main body and the cover member by a puncture needle provided exterior to the reaction vessel in the state of the cover member being mounted on the reaction vessel main body (refer to Claim 1).

Moreover, a first nozzle tip of the present invention is a nozzle.tip that can be fitted into the nozzle tip fitting space of the reaction vessel of the present invention, in which are formed a nozzle mounting hole that can be-mounted on a nozzle capable of taking in and discharging liquid, and an intake and discharge hole leading to the nozzle mounting hole, wherein the intake and discharge hole is formed such that the intake and discharge hole is positioned in the nozzle tip fitting space in the state with the nozzle tip fitted into the nozzle tip fitting space (refer to Claim 11).

Moreover,, a second nozzle tip of the present invention is a nozzle tip that can be fitted in the nozzle tip fitting space of the reaction vessel of the present invention, in which are formed a nozzle mounting hole that can be mounted on a nozzle capable of taking in and discharging liquid and an interior space leading to the nozzle mounting hole, wherein the interior space is formed such that the interior space is tightly closed when the nozzle is mounted in the nozzle mounting hole, and a through-hole that causes the exterior of the nozzle tip to communicate with the interior space can be formed by a puncture needle provided exterior to the nozzle tip (refer to Claim 14).

Moreover, the puncture vessel of the present invention is a puncture vessel comprising a liquid holding space that can hold liquid, an opening part leading to the liquid holding space, and a puncture needle, wherein the liquid holding space is formed such that the reaction vessel according to Claim 1 can be held in the liquid holding space from the opening part, and the puncture needle is provided to protrude from the wall part of the puncture vessel that forms the liquid holding space to the liquid holding space (refer to Claim 18).

Moreover, a first reaction product extracting apparatus of the present invention is a reaction product extracting apparatus comprising a reaction vessel installation part in which the reaction vessel of the present invention is installed, a puncture vessel installation part in which the puncture vessel of the present invention is installed, a nozzle capable of taking in and discharging liquid, and a nozzle transfer part, wherein the nozzle transfer part conducts the operations of: fitting the first nozzle tip of the present invention mounted on the nozzle into the nozzle tip fitting space of the reaction vessel installed on the reaction vessel installation part; transferring the reaction vessel on which the nozzle tip is fitted to the puncture vessel installation part; and holding the reaction vessel in the liquid holding space of the puncture vessel installed on the puncture vessel installation part, and using the puncture needle provided on the puncture vessel to form in the cover member and the reaction vessel main body a through-hole communicating between the liquid holding space of the puncture vessel, the reaction solution holding space of the reaction vessel, and the intake and discharge hole of the nozzle tip; and the nozzle conducts the operation of extracting a reaction product in the reaction vessel into a liquid held in the liquid holding space of the puncture vessel by taking in and discharging the liquid through the through-hole (refer to Claim 20).

Moreover, a second reaction product extracting apparatus of the present invention is a reaction product extracting apparatus comprising a reaction vessel installation part in which the reaction vessel of the present invention is installed, a puncture vessel installation part in which the puncture vessel of the present invention is installed, a nozzle capable of taking in and discharging liquid, and a nozzle transfer part, wherein the nozzle transfer part conducts the operations of: fitting the second nozzle tip of the present invention mounted on the nozzle into the nozzle tip fitting space of the reaction vessel installed on the reaction vessel installation part; transferring the reaction vessel on which the nozzle tip is fitted to the puncture vessel installation part; and holding the reaction vessel in the liquid holding space of the puncture vessel installed on the puncture vessel installation part, and using the puncture needle provided on the puncture vessel to form in the reaction vessel main body, the cover member and the nozzle tip a through-hole communicating between the liquid holding space of the puncture vessel, the reaction solution holding space of the reaction vessel, and the interior space of the nozzle tip; and the nozzle conducts the operation of extracting a reaction product in the reaction vessel into a liquid held in the liquid holding space of the puncture vessel by taking in and,discharging the liquid through the through-hole (refer to Claim 21).

When the reaction vessel of the present invention is used to conduct the target reaction, after the reaction solution is held in the reaction solution holding space from the opening part leading to the reaction solution holding space, the cover member is mounted on the reaction vessel main body. The opening part leading to the reaction solution holding space is sealed by mounting the cover member, and the reaction solution holding space is tightly closed. In this state, the target reaction is produced in the reaction solution held in the reaction solution holding space. During the reaction, the temperature of the reaction solution is controlled as necessary. The reaction product is contained in the reaction solution after the reaction.

Before the reaction or after the reaction, the nozzle tip mounted on the nozzle is fitted from the nozzle tip fitting hole into the nozzle tip fitting space of the reaction vessel in the state of the cover member being mounted on the reaction vessel main body.

When using the first or second reaction product extracting apparatus of the present invention, the reaction vessel after the reaction is installed on the reaction vessel installation part, and the nozzle tip is fitted on the nozzle tip fitting space by the nozzle transfer part. When the first reaction product extracting apparatus of the present invention is used, the nozzle tip that fits into the nozzle tip fitting space is the first nozzle tip of the present invention, and when the second reaction product extracting apparatus of the present invention is used, the nozzle tip that fits into the nozzle tip fitting space is the second nozzle tip of the present invention. Further, when a temperature controller that can control the temperature of the reaction solution held in the reaction vessel is provided on the reaction vessel installation part (refer to Claims 22 and 23), the reaction vessel before the reaction can be installed in the reaction vessel installation part, and the target reaction can be produced in the reaction vessel installation part.

The nozzle tip fitted in the nozzle tip fitting space is a mediating member that can transmit intake force (pressure reduction) and discharge force (pressure application) by the nozzle to the exterior of the nozzle tip, and for example, either the first or second nozzle tip of the present invention can be used. The first nozzle tip of the present invention can transmit intake force and discharge force by the nozzle to the exterior of the nozzle tip through the intake and discharge hole. Moreover, the second nozzle tip of the present invention can use a puncture needle to form a through-hole leading to the interior space, and can transmit intake force and discharge force by the nozzle to the exterior of the nozzle tip through the through-hole. Note that, even if a nozzle tip just as is cannot transmit intake force and discharge force by the nozzle to the exterior of the nozzle tip such as the second nozzle tip of the present invention, the nozzle tip can be used as a nozzle tip to be fitted into the nozzle tip fitting space, if the nozzle tip can transmit intake force and discharge force by the nozzle by using a puncture needle to form a through-hole.

When the first nozzle tip of the present invention is used, the nozzle tip is fitted into the nozzle tip fitting space, for example, such that the intake and discharge hole of the nozzle tip passes through to the nozzle tip fitting space. At this time, the position of the intake and discharge hole of the nozzle tip within the nozzle tip fitting space is defined, for example, by contact of the cover member with the contact part of the nozzle tip (refer to Claim 13). Before or after fitting the nozzle tip in the nozzle tip fitting space the puncture needle provided exterior to the reaction vessel is used to form in the reaction vessel main body and the cover member a through-hole communicating between the exterior of the reaction vessel, the reaction solution holding space and the nozzle tip fitting space. First, by puncturing the reaction vessel main body, the puncture needle forms a through-hole communicating between the exterior of the reaction vessel and the reaction solution holding space, and next, by puncturing the cover member, the puncture needle forms a through-hole communicating between the reaction solution holding space and the nozzle tip fitting space. In the reaction vessel in which the fitting of the nozzle tip and the puncturing by the puncture needle are completed, the exterior of the reaction vessel and the reaction solution holding space are connected through the through-hole formed in the reaction vessel main body, the reaction solution holding space and the nozzle tip fitting space are connected through the through-hole formed in the cover member, and the nozzle tip fitting space passes through to the intake and discharge hole of the nozzle tip; and therefore, the intake force and discharge force by the nozzle can be transmitted to the exterior of the reaction vessel. Consequently, when the reaction vessel is soaked in a liquid so that the through-hole formed in the reaction vessel main body is soaked in the liquid, and the nozzle begins intake and discharge, the liquid flows into the reaction solution holding space in conjunction with intake by the nozzle, and flows out from the reaction solution holding space in conjunction with discharge by.the nozzle. By repeating intake and discharge by the nozzle, the reaction product contained in the reaction solution in the reaction vessel is extracted into the liquid.

If the first nozzle tip of the present invention is used, the nozzle tip may be fitted into the nozzle tip fitting space such that the intake and discharge hole of the nozzle tip is sealed by making contact with the wall part of the cover member that forms the nozzle tip fitting space. However, in this case, the wall part of the cover member that seals the intake and discharge hole of the nozzle tip must have a contact surface with the reaction solution holding space. Before or after fitting the nozzle tip to the nozzle tip fitting space, the puncture needle provided exterior to the reaction vessel is used to form in the reaction vessel main body and cover member a through-hole that causes the exterior of the reaction vessel to communicate with the reaction solution holding space, and the intake and discharge hole of the nozzle tip. The through-hole communicating between the reaction solution holding space and the intake and discharge hole of the nozzle tip is formed in the wall part of the cover member that seals the intake and discharge hole of the nozzle tip. In the reaction vessel in which the fitting of the nozzle tip and the puncturing by the puncture needle are completed, the exterior of the reaction vessel and the reaction solution holding space are connected through the through-hole formed in the reaction vessel main body, the reaction solution holding space and the_intake and discharge hole of the nozzle tip are connected through the through-hole formed in the cover member; and therefore, the intake force and discharge force by the nozzle can be transmitted to the exterior of the reaction vessel. Consequently, when the reaction vessel is soaked in a liquid so that the through-hole formed in the reaction vessel main body is soaked in the liquid, and the intake and discharge by the nozzle are repeated in the same way as above, the reaction product contained in the reaction solution in the reaction vessel is extracted into the liquid.

In addition, if the second nozzle tip of the present invention is used, for example, after fitting the nozzle tip to the nozzle tip fitting space, the puncture needle provided exterior to the reaction vessel is used to form in the reaction vessel main body, cover member, and nozzle tip a through-hole that causes the exterior of the reaction vessel to communicate with the reaction solution holding space and the interior space of the nozzle tip. In the reaction vessel in which the fitting of the nozzle tip and the puncturing by the puncture needle are completed, the exterior of the reaction vessel and the reaction solution holding space are connected through the through-hole formed in the reaction vessel main body, the reaction solution holding space and the interior space of the nozzle tip are connected through the through-hole formed in the cover member and the nozzle tip; and therefore, the intake force and discharge force by the nozzle can be transmitted to the exterior of the reaction vessel. Consequently, when the reaction vessel is soaked in a liquid so that the through-hole formed in the reaction vessel main body is soaked in the liquid, and the intake and discharge by the nozzle are repeated in the same way as above, the reaction product contained in the reaction solution in the reaction vessel is extracted into the liquid.

When using the puncture vessel of the present invention, the reaction vessel after the reaction is held from the opening part of the puncture vessel in the liquid holding space, and the target through-hole is formed by the puncture needle that protrudes from the wall part of the puncture vessel that forms the liquid holding space to the liquid holding space (Specifically, when using the first nozzle tip of the present invention, the target through-hole is a through-hole that connects the liquid holding space of the puncture vessel, the reaction solution holding space of the reaction vessel and the intake and discharge hole of the nozzle tip; and when using the second nozzle tip of the present invention, the target through-hole is a through-hole that connects the liquid holding space of the puncture vessel, the reaction solution holding space of the reaction vessel and the interior space of the nozzle tip.) The formation of the through-hole by the puncture needle may be conducted prior to fitting or after fitting the nozzle tip. The reaction vessel in which the fitting of the nozzle tip and the puncturing by the puncture needle are completed, is soaked in a liquid held in the liquid holding space. The holding of the liquid in the liquid holding space may be conducted prior or subsequent to forming the through-hole using the puncture needle. After soaking, by repeating intake and discharge by the nozzle in the same way as above, the reaction product contained in the reaction solution in the reaction vessel is extracted into the liquid held in the liquid holding space of the puncture vessel.

When using the first or second reaction product extracting apparatus of the present invention, after fitting the nozzle tip, the reaction vessel is transferred from the reaction vessel installation part to the puncture vessel installation part by transferring the nozzle. Next by transferring the nozzle, the reaction vessel is held in the liquid holding space of the puncture vessel installed on the puncture vessel installation part. At this time the reaction vessel is pressed on the puncture needle installed on the puncture vessel, and the target through-hole is formed by the puncture needle (Specifically, when using the first reaction product extracting apparatus of the present invention, the target through-hole is a through-hole that connects the liquid holding space of the puncture vessel, the reaction solution holding space of the reaction vessel and the intake and discharge hole of the nozzle tip; and when using the second reaction product extracting apparatus of the present invention, the target through-hole is a through-hole that connects the liquid holding space of the puncture vessel, the reaction solution holding space of the reaction vessel and the interior space of the nozzle tip.) Next, intake and discharge by the nozzle begins, and the liquid held in the liquid holding space of the puncture vessel is taken up and discharged through the through-hole. By repeating intake and discharge by the nozzle, the reaction product contained in the reaction solution in the reaction vessel is extracted into the liquid held in the liquid holding space of the puncture vessel.

In this way, if the reaction vessel, nozzle tip, puncture vessel and reaction product extracting apparatus of the present invention are used, after conducting the reaction in the state with the cover member mounted on the reaction vessel main body, the reaction product contained in the reaction solution within the reaction vessel can be acquired without removing the cover member from the reaction vessel main body.

In the reaction vessel of the present invention, the shapes of the reaction solution holding space formed in the reaction vessel main body and of the opening part leading to the reaction solution holding space are not particularly limited. Moreover, the number of reaction solution holding spaces formed in the reaction vessel main body is not particularly limited, nor is the number of opening parts leading to one reaction solution holding space particularly limited. The reaction solution holding space formed in the reaction vessel main body and the opening part leading to the reaction solution holding space, for example, may be formed in the reaction vessel main body as a concave part having the opening part at the upper end. Preferably, a thin wall configures the wall part of the reaction vessel main body that forms the reaction solution holding space. The temperature of the reaction solution can thereby by quickly and efficiently controlled.

In the reaction vessel of the present invention, the sizes of the reaction solution holding space formed in the reaction vessel main body and of the opening part leading to the reaction solution holding space are preferably of a size such that the reaction solution added from the opening part is held in the reaction solution holding space as is (even if force other than downward gravitation is not applied to the reaction solution). Centrifuging is thereby not required when holding the reaction solution in the reaction solution holding space, and the partition of the reaction solution into the reaction solution holding space can be automated.

The composition of the reaction solution held in the reaction solution holding space is suitably determined corresponding to the type of reaction. If the target reaction is PCR, a PCR reaction solution is used as the reaction solution. H₂O, buffer, MgCl₂, dNTP mix, primer, template DNA, and Taq polymerase, etc. may, for example, comprise the PCR reaction solution. When conducting PCR using the PCR reaction solution, PCR amplification fragments (for example, DNA fragments) as the reaction product is contained in the reaction solution after the reaction. Note that, when conducting PCR, it is necessary to control the temperature of the PCR reaction solution.

In the reaction vessel of the present invention, the cover member is configured to be able to tightly close the reaction solution holding space by sealing the opening part leading to the reaction solution holding space. The cover member, for example, is configured to have an outer periphery surface that can fit snugly against the inner periphery surface (for example, inner periphery surface of a concave part formed in the reaction vessel main body) of the wall part of the reaction vessel main body that forms the reaction solution holding space (refer to Claim 9). Moreover, the cover member, for example, is configured to have a snugly fitting part that can fit snugly against the circumferential part of the opening part leading to the reaction solution holding space. By tightly closing the reaction solution holding space, contamination to the reaction solution held in the reaction solution holding space can be prevented. Moreover, tightly closing the reaction solution holding space is necessary when transmitting the intake force and discharge force by the nozzle to the exterior of the reaction vessel.

In the reaction vessel of the present invention, it is preferable that a concave part and/or convex part is provided on the inner periphery surface of the wall part of the reaction vessel main body that forms the reaction solution holding space, and a convex part and/or concave part that can fit with the concave part and/or convex part provided on the inner periphery surface of the wall part of the reaction vessel main body is provided on the outer periphery surface of the cover member (refer to Claim 10). The state of the cover member mounted on the reaction vessel main body is thereby strengthened, and the cover member will not come off from the reaction vessel main body even if transferring a reaction vessel in the state of the cover member mounted on the reaction vessel main body (for example, even if transferring by holding the cover member without supporting the reaction vessel main body). Consequently, it is possible to transfer the reaction vessel in the state of the cover member covering the reaction vessel main body by transferring the nozzle on which is mounted the nozzle tip fitted in the nozzle tip fitting space. In order to make the state when the cover member is mounted on the reaction vessel main body even stronger, in addition to providing a concave part and/or convex part on the circumferential part of the opening part that passes through to the reaction solution holding space, a convex part and/or concave part that can fit with the concave part and/or convex part provided on the circumferential part of the opening part that passes through to the reaction solution holding space may be provided on the snugly fitting part of the cover member that can fit snugly against the circumferential part of the opening part that passes through to the reaction solution holding space.

In the reaction vessel of the present invention, the shapes and sizes of the nozzle tip fitting space formed in the cover member and of the nozzle tip fitting hole leading to the nozzle tip fitting space are suitably adjusted according to the shape and size of the nozzle that is fitted into the nozzle tip fitting space. Moreover, the nozzle tip fitting hole is formed in a position in which the nozzle tip can be fitted into the nozzle tip fitting space from the nozzle tip fitting hole in the state with the cover member mounted on the reaction vessel main body.

In the reaction vessel of the present invention, it is preferable that the nozzle tip fitting space is formed such that the nozzle tip fitting space is tightly closed when the nozzle tip fitting hole is sealed (refer to Claim 2). In this case, by fitting the nozzle tip in the nozzle tip fitting space, the nozzle tip fitting space can be tightly closed and the intake force and discharge force by the nozzle can be efficiently transmitted to the nozzle tip fitting space. For example, if the wall part of the cover member that forms the nozzle tip fitting space has an inner periphery surface that can fit snugly against the outer periphery surface of the nozzle tip (refer to Claim 3), when fitting the nozzle tip to the nozzle tip fitting space, the nozzle tip fitting space will be tightly closed by snug fitting of the inner periphery surface of the wall part of the cover member that forms the nozzle tip fitting space against the outer periphery surface of the nozzle tip. Here, "tightly closed" means a state in which no gaps or fine holes, etc. are present that would prevent the transmission of the intake force (pressure decrease) and discharge force (applied pressure) by the nozzle to the nozzle tip fitting space, and the state in which the nozzle tip fitting space passes through the intake and discharge hole of the nozzle tip is included in "tightly sealed". Moreover, also included in "tightly sealed" is the state in which gaps or fine holes, etc. are present but are not enough to obstruct the transmission of the intake force (pressure decrease) and discharge force (applied pressure) by the nozzle to the nozzle tip fitting space.

In the reaction vessel of the present invention, it is preferable that a convex part and/or concave part that can fit with a concave part and/or convex part provided on the outer periphery surface of the nozzle tip is provided on the inner periphery surface of the wall part of the cover member that fits snugly against the outer periphery surface of the nozzle tip (refer to Claim 4). In this case, the state with the nozzle tip fitted to the nozzle tip fitting space is strengthened, and the nozzle tip will not come off from the nozzle tip fitting space even if force in the direction opposite to the direction of fitting into the nozzle tip fitting space is applied to a nozzle tip that has been fitted to the nozzle tip fitting space. Consequently, it is possible to transfer the reaction vessel in the state with the cover member mounted on the reaction vessel main body by transferring the nozzle onto which has been mounted the nozzle tip fitted to the nozzle tip fitting space.

In the reaction vessel of the present invention, the materials of the reaction vessel main body and the cover member are selected from materials that are not corroded by the reaction solution and can withstand the reaction conditions (for example, the reaction temperature), and that can be punctured by a puncture needle provided exterior to the reaction vessel. If the puncture needle is configured by a metal such as stainless steel, then plastic or glass, etc., for example, may be selected as the materials of the reaction vessel main body and cover member.

In the reaction vessel of the present invention, the relative positions of the reaction solution holding space and the nozzle tip fitting space are adjusted so that the puncture needle provided exterior to the reaction vessel can form in the reaction vessel main body and the cover member a through-hole, which connects the exterior of the reaction vessel, the reaction solution holding space and the nozzle tip fitting space.

For example, the reaction solution holding space and the nozzle tip fitting space are formed such that the wall part of the cover member that forms the nozzle tip fitting space has a contact surface with the reaction solution holding space in the state of the cover member being mounted on the reaction vessel main body (refer to Claim 5). In this case, a through-hole that causes the reaction solution holding space to communicate with the nozzle tip fitting space can be formed in the wall part of the cover member, which forms the nozzle tip fitting space and which has a contact surface with the reaction solution holding space. Moreover, the wall part of the cover member faces opposite any part of the wall part of the reaction vessel main body that forms the reaction solution holding space, and therefore a single puncture needle provided exterior to the reaction vessel can form in the reaction vessel main body and the cover member a through-hole communicating between the exterior of the reaction vessel, the reaction solution holding space and the nozzle tip fitting space.

Moreover, for example, the reaction solution holding space and the nozzle tip fitting space are formed such that the wall part of the cover member, which forms the nozzle tip fitting space and which has a contact surface with the reaction solution holding space, forms the deepest part of the nozzle tip fitting space (refer to Claim 6). Here, the "deepest part of the nozzle tip fitting space" means the part of the nozzle tip fitting space that is most separated from the nozzle tip fitting hole, and the nozzle tip is fitted facing the deepest part of the nozzle tip fitting space from the nozzle tip fitting hole.

Moreover, for example, the reaction solution holding space and the nozzle tip fitting space are formed such that the wall part of the cover member, which forms the nozzle tip fitting space and which has a contact surface with the reaction solution holding space, is opposite the deepest part of the reaction solution holding space (refer to Claim 7). Here, the "deepest part of the reaction solution holding space" means the part of the reaction solution holding space closest to the plane on which the reaction vessel is placed. In this case, the puncture needle provided perpendicularly or substantially perpendicularly to the plane on which the reaction vessel is placed (refer to Claim 19) can form in the reaction vessel main body and the cover member a through-hole communicating between the exterior of the reaction vessel, the reaction solution holding space and the nozzle tip fitting space.

In the reaction vessel of the present invention, it is preferable that the nozzle tip fitting space is formed such that the direction of fitting the nozzle tip into the nozzle tip fitting space is perpendicular or substantially perpendicular to the plane on which the reaction vessel is placed (refer to Claim 8). In this case, the force that the reaction vessel receives from the nozzle tip when fitting the nozzle tip into the nozzle tip fitting space is a force in a direction perpendicular or substantially perpendicular to the plane on which the reaction vessel is placed. Consequently, the nozzle tip can be easily fitted to the nozzle tip fitting space without displacement of the reaction vessel when fitting the nozzle tip into the nozzle tip fitting space.

The first nozzle tip of the present invention is configured such that the nozzle can transmit the intake force and discharge force to the exterior of the nozzle tip through the intake and discharge hole. The shape of the nozzle mounting hole is not particularly limited as long as the nozzle can be mounted. The number of nozzle mounting holes is not particularly limited, but normally is 1. The shape and number of the intake and discharge hole are not particularly limited, but normally is 1. The intake and discharge hole is formed to be positioned in the nozzle tip fitting space in the state when the nozzle tip is fitted into the nozzle tip fitting space. The intake and discharge hole, for example, is formed to be positioned in the most distal part in relation to the direction of fitting the nozzle tip into the nozzle tip fitting space. Moreover, the intake and discharge hole, for example, is formed on the outer periphery surface of the nozzle tip. When the nozzle tip is fitted into nozzle tip fitting space, the intake and discharge hole may be formed in a position that maintains the open state of the intake and discharge hole, or may be formed in a position with the intake and discharge hole sealed.

In the first nozzle tip of the present invention, it is preferable that a filter for preventing the infiltration of liquid from the intake and discharge hole into the interior is provided in the vicinity of the intake and discharge hole (refer to Claim 12). In this case, contamination of the interior of the nozzle tip and of the interior of the nozzle by splashing of the liquid that permeates the reaction vessel can be prevented.

It is preferable that the first nozzle tip of the present invention comprises a contact part that contacts the cover member and defines the position of the intake and discharge hole in the nozzle tip fitting space (refer to Claim 13). By adjusting the position of the intake and discharge hole in the nozzle tip fitting space, the open state of the intake and discharge hole of the nozzle tip fitted in the nozzle tip fitting space can be adjusted. Specifically, when the nozzle tip is fitted into the nozzle tip fitting space, the intake and discharge hole can be sealed while the intake and discharge hole passes through to the nozzle tip fitting space. The contact part of the nozzle tip, for example, may be provided such that contact is made with the circumferential part of the nozzle tip fitting hole.

The second nozzle tip of the present invention is configured such that a puncture needle can form a through-hole passing through to the interior space, and the nozzle can transmit the intake force and discharge force to the exterior of the nozzle tip through the through-hole. The shape of the nozzle mounting hole is not particularly limited as long as the nozzle can be mounted. The number of nozzle mounting holes is not particularly limited, but normally is 1. The interior space is formed to be tightly closed when the nozzle is mounted on the nozzle mounting hole. Here, "tightly closed" means a state in which no gaps or fine holes, etc. are present that would prevent the transmission of the intake force and discharge force by the nozzle to the interior space, and included in "tightly sealed" is the state in which gaps or fine holes, etc. are present but are not enough to obstruct the transmission of the intake force and discharge force by the nozzle to the interior space. The material of the nozzle tip may be suitably selected such that the puncture needle may puncture the nozzle tip. Normally, plastic is selected as the material of the nozzle tip.

Preferably, the first and second nozzle tips of the present invention can tightly close the nozzle tip fitting space by sealing the nozzle tip fitting hole (refer to Claim 15). In this case, the nozzle tip fitting space is tightly closed by fitting the nozzle tip into the nozzle tip fitting space, and the intake force and discharge force by the nozzle can be efficiently transmitted to the nozzle tip fitting space. For example, if the nozzle tip has an outer periphery surface that can fit snugly against the inner periphery surface of the wall part of the cover member that forms the nozzle tip fitting space (refer to Claim 16), when fitting the nozzle tip to the nozzle tip fitting space, the nozzle tip fitting space will be tightly closed by snug fitting of the inner periphery surface of the wall part of the cover member that forms the nozzle tip fitting space against the outer periphery surface of the nozzle tip. Here, "tightly closed" means a state in which no gaps or fine holes, etc. are present that would prevent the transmission of the intake force (pressure decrease) and discharge force (applied pressure) by the nozzle to the nozzle tip fitting space, and the state in which the nozzle tip fitting space passes through the intake and discharge hole of the nozzle tip is included in "tightly sealed". Moreover, also included in "tightly sealed" is the state in which gaps or fine holes, etc. are present but are not enough to obstruct the transmission of the intake force (pressure decrease) and discharge force (applied pressure) by the nozzle to the nozzle tip fitting space.

In the first and second nozzle tip of the present invention, it is preferable that a convex part and/or concave part that can fit with the concave part and/or convex part provided on the inner periphery surface of the wall part of the cover member that forms the nozzle tip fitting space be provided on the outer periphery surface of the nozzle tip (refer to Claim 17). The state with the nozzle tip fitted to the nozzle tip fitting space is thereby strengthened, and the nozzle tip will not come off from the nozzle tip fitting space even if force in the direction opposite to the direction of fitting into the nozzle tip fitting space is applied to a nozzle tip that has been fitted to the nozzle tip fitting space. Consequently, it is possible to transfer the reaction vessel in the state with the cover member mounted on the reaction vessel main body by transferring the nozzle onto which has been mounted the nozzle tip fitted to the nozzle tip fitting space.

The shape of the puncture needle provided exterior to the reaction vessel of the present invention (for example, a puncture needle provided on a puncture vessel of the present invention) is not particularly limited as long as the puncture needle can puncture the cover member and the reaction vessel main body (and the nozzle tip, depending on the case), and for example shapes with a pointed tip, concretely, conical, pyramidal and needle shapes, may be cited as the shape of the puncture needle. Here, "pointed shape" means becoming narrower toward the tip, and in addition to shapes that have a sharp tip, shapes that end in a rounded tip and shapes with a flat tip are included. The material of the puncture needle is suitably determined to be able to puncture the cover member and reaction vessel main body (and nozzle tip, depending on the case), but normally is a metal such as stainless steel. The number of puncture needles used for puncturing is not particularly limited. The length of the puncture needle may be suitably adjusted to be able to form the target through-hole. For example, if it is necessary to form a through-hole in a nozzle tip fitted to a nozzle tip fitting space (refer to Claim 14), the length of the part of the puncture needle that protrudes out from the wall part of the cover member that forms.the nozzle tip fitting space to the nozzle tip fitting space may be suitably adjusted.

Any structure of nozzle may be used for the first and second reaction product extracting apparatus of the present invention as long as the nozzle can take in and discharge liquid, for example, a nozzle having the same structure as the nozzles used in well-known partition apparatuses may be used. Moreover, any structure may be used for the nozzle transfer part as long as the specified operations are conducted.

In the first and second reaction product extracting apparatus of the present invention, it is preferable that a first temperature controller that can control the temperature of the reaction solution held in the reaction vessel installed in the reaction vessel installation part be provided on the reaction vessel installation part is provided on the reaction vessel installation part (refer to Claim 22). In addition, it is preferable that the first and second reaction product extracting apparatus of the present invention comprise a second temperature controller that is mounted in the nozzle tip fitting space in a mountable and removable manner and that can control the temperature of the reaction solution held in the reaction vessel installed in the reaction vessel installation part, and a temperature controller mounting and removing part that can mount/remove the second temperature controller in/from the nozzle tip fitting space, and the temperature controller mounting and removing part conducts the operation of mounting the second temperature controller in the nozzle tip fitting space prior to the reaction, and the operation of removing the second temperature controller from the nozzle tip fitting space after the reaction (refer to Claim 23).

By providing a first or second temperature controller on the first and second reaction product extracting apparatus of the present invention, even if the target reaction is a reaction requiring temperature control of the reaction solution (for example, PCR), it is possible to automate the series of processes from the reaction in the reaction vessel to the acquisition of the reaction product contained in the reaction solution within the reaction vessel. In particular, by providing both first and second temperature controllers, the temperature of the reaction solution can be rapidly and efficiently controlled. The first or second temperature controller is, for example, provided with a heat-conductive metal block or a heat-conductive metal plate, and the temperature of the reaction solution is controlled through the contact of the reaction vessel main body or cover member with the heat-conductive metal block or heat-conductive metal plate. Note that the operation of fitting the nozzle tip into the nozzle tip fitting space is conducted after the operation of removing the second temperature controller from the nozzle tip fitting space. Moreover, control is exerted so that the operation of fitting the nozzle tip into the nozzle tip fitting space and the operation of removing the second temperature controller from the nozzle tip fitting space do not mutually interfere.

### BRIEF DESCRIPTION OF THE DRAWINGS

Figure 1 is a cross-sectional diagram indicating an embodiment of a reaction vessel and nozzle tip of the present invention;
Figure 2(a) is a cross-sectional diagram indicating the state of the cover member mounted on the reaction vessel main body of the reaction vessel related to the same embodiment; and Figure 2(b) is a cross-sectional diagram indicating the state of the nozzle tip fitted on the cover member mounted on the reaction vessel main body of the reaction vessel and nozzle tip related to the same embodiment;
Figure 3 is a partial cross-sectional diagram indicating an embodiment of the reaction product extracting apparatus of the present invention;
Figure 4(a) is an exploded diagonal view diagram indicating the structure of the first temperature controller and second temperature controller provided on the reaction product extracting apparatus related to the same embodiment; and Figure 4(b) is a diagonal view diagram indicating the state of the first temperature controller and second temperature controller during the reaction;
Figure 5 is a cross-sectional diagram indicating the state in the vicinity of the reaction vessel during the reaction;
Figure 6 is a partial cross-sectional diagram indicating the operations up to the reaction product extraction of the reaction product extracting apparatus related to the same embodiment; and
Figure 7 is a partial cross-sectional diagram indicating another embodiment of a reaction vessel and nozzle tip of the present invention.

### BEST MODE FOR CARRYING OUT THE INVENTION

Embodiments of the present invention will now be described through reference to the drawings.

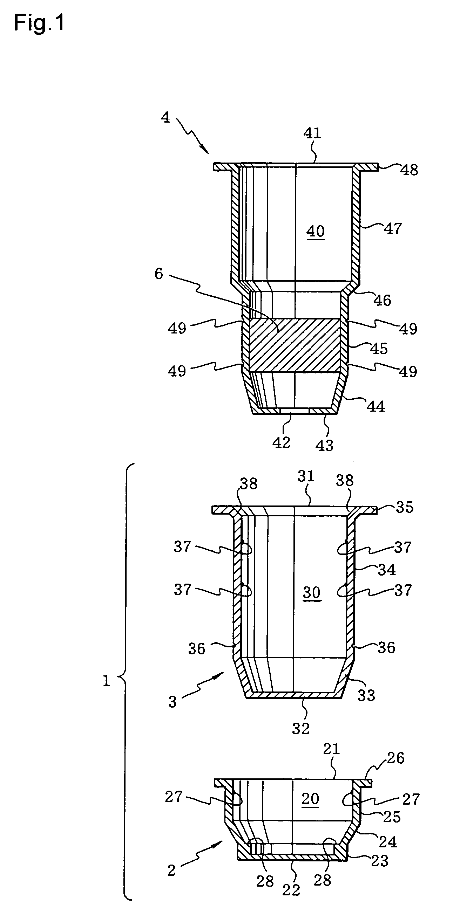

As shown in Figs. 1 to 3, the reaction vessel 1 pertaining to this embodiment comprises a reaction vessel main body 2 and a cover member 3.

As shown in Fig. 1, the reaction vessel main body 2 has a disk-shaped bottom plate 22, a first side plate 23 in the form of a cylinder that rises up from the edges of the bottom plate 22 while maintaining the same diameter, a tapering second side plate 24 that rises up from the top edge of the first side plate 23 while gradually expanding in diameter, a third side plate 25 in the form of a cylinder that rises up from the top edge of the second side plate 24b while maintaining the same diameter, and a flange 26 provided at the top edge of the third side plate 25.

The bottom plate 22 and the first to third side plates 23 to 25 of the reaction vessel main body 2 consist of thin plates made of plastic, glass, etc., and the thickness of the thin plates is preferably about 0.1 to 0.5 mm.

As shown in Fig. 1, a reaction solution holding space 20 surrounded by the bottom plate 22 and the first to third side plates 23 to 25 is formed in the reaction vessel main body 2, and an opening 21 that leads to the reaction solution holding space 20 is formed at the top end of the reaction vessel main body 2.

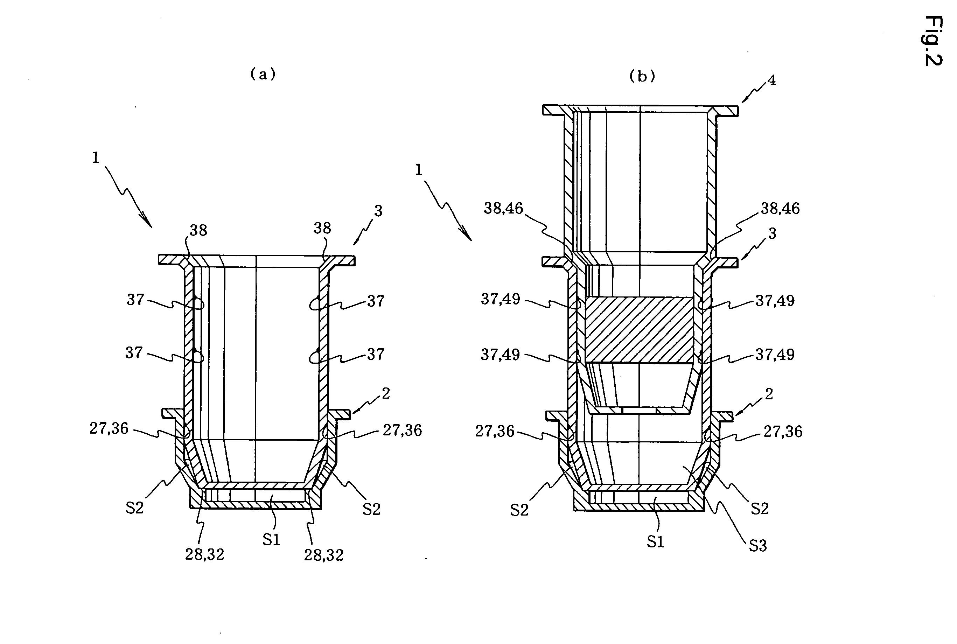

The reaction solution holding space 20 is designed so that a reaction solution can be introduced through the opening 21. Also, the reaction solution holding space 20 does not lead to any opening other than the opening 21, and is therefore closed off when the opening 21 is sealed (see Fig. 2(a)).

The inside diameter of the third side plate 25 of the reaction vessel main body 2 is substantially the same as the outside diameter of a second side plate 34 of the cover member 3, so that when the cover member 3 is placed over the reaction vessel main body 2, the inner peripheral surface of the third side plate 25 of the reaction vessel main body 2 fits snugly against the outer peripheral surface of the second side plate 34 of the cover member 3 (see Fig. 2(a)).

As shown in Fig. 1, a convex component 27 is provided on the inner peripheral surface of the third side plate 25 of the reaction vessel main body 2, and the convex component 27 is designed to fit into a concave component 36 provided on the outer peripheral surface of the second side plate 34 of the cover member 3 (see Fig. 2(a)).

As shown in Fig. 1, an abutting surface 28 is provided to the top end of the first side plate 23 of the reaction vessel main body 2, and the abutting surface 28 is designed so as to strike the a bottom plate 32 of the cover member 3 when the cover member 3 is placed over the reaction vessel main body 2 (see Fig. 2(a)).

As shown in Fig. 1, the cover member 3 has a disk-shaped bottom plate 32, a tapering first side plate 33 that rises up from the edges of the bottom plate 32 so as to gradually increase in diameter, a second side plate 34 in the form of a cylinder that rises up from the top end of the first side plate 33 while maintaining the same diameter, and a flange 35b provided to the top edges of the second side plate 34.

The bottom plate 32, the first side plate 33, and the second side plate 34 of the cover member 3b consist of thin plates made of plastic, glass, etc., and the thickness of the thin plates is preferably about 0.1 to 0.5 mm.

As shown in Fig. 1, a nozzle tip fitting space 30 surrounded by the bottom plate 32, the first side plate 33, and the second side plate 34 is formed in the cover member 3, and a nozzle tip fitting hole 31 that leads into the nozzle tip fitting space 30 is formed at the top end of the cover member 3.

The nozzle tip fitting space 30 is formed so that a nozzle tip 4 can be mounted through the nozzle tip fitting hole 31 (see Fig. 2(b)). Also, the nozzle tip fitting space 30 does not lead to any opening other than the nozzle tip fitting hole 31, and is therefore closed off when the nozzle tip fitting hole 31 is sealed (see Fig. 2(b)).

The nozzle tip fitting hole 31 is formed in the portion of the cover member 3 other than the portion where the opening 21 of the reaction vessel main body 2 is sealed off, so when the cover member 3 is mounted on the reaction vessel main body 2, the nozzle tip 4 can be mounted in the nozzle tip fitting space 30 through the nozzle tip fitting hole 31 (see Fig. 2(b)).

The deepest portion of the nozzle tip fitting space 30 (the portion of the nozzle tip fitting space 30 farthest away from the nozzle tip fitting hole 31) is formed by the bottom plate 32 of the cover member 3, and the nozzle tip 4 is mounted toward the deepest part of the nozzle tip fitting space 30 from the nozzle tip fitting hole 31 (see Fig. 2(b)).

The mounting direction of the nozzle tip 4 with respect to the nozzle tip fitting space 30 is perpendicular or substantially perpendicular to the surface (the lower surface of the bottom plate 22 of the reaction vessel 1) on which the reaction vessel 1 is placed (see Fig. 2(b)), so the force exerted on the reaction vessel 1 by the nozzle tip 4 in the mounting of the nozzle tip 4 is a force that is perpendicular or substantially perpendicular to the surface on which the reaction vessel 1 is placed. Therefore, the nozzle tip 4 can be easily mounted in the nozzle tip fitting space 30 without the reaction vessel 1 shifting its position while the nozzle tip 4 is being mounted.

The outside diameter of the second side plate 34 of the cover member 3 is substantially the same as the inside diameter of the third side plate 25 of the reaction vessel main body 2, so that the inner peripheral surface of the third side plate 25 of the reaction vessel main body 2 fits snugly against the outer peripheral surface of the second side plate 34 of the cover member 3 when the cover member 3 is placed over the reaction vessel main body 2 (see Fig. 2(a)).

As shown in Fig. 1, the concave component 36 is provided on the outer peripheral surface of the second side plate 34 of the cover member 3, and the concave component 36 fits with the convex component 27 provided on the inner peripheral surface of the third side plate 25 of the reaction vessel main body 2 (see Fig. 2(a)).

As shown in Fig. 1, a convex component 37 is provided on the inner peripheral surface of the second side plate 34 of the cover member 3, and the convex component 37 fits with a concave component 49 provided on the outer peripheral surface of a second side plate 44 of the nozzle tip 4 (see Fig. 2(b)).

As shown in Fig. 1, an abutting surface 38 is provided to the top end of the second side plate 34 of the cover member 3, and the abutting surface 38 strikes a third side plate 46 of the nozzle tip 4 when the nozzle tip 4 is mounted in the nozzle tip fitting space 30 (see Fig. 2(b)).

When the cover member 3 is placed over the reaction vessel main body 2, as shown in Fig. 2(a), the inner peripheral surface of the third side plate 25 of the reaction vessel main body 2 fits snugly against the outer peripheral surface of the second side plate 34 of the cover member 3, the opening 21 of the reaction vessel main body 2 is sealed off by the bottom plate 32, the first side plate 33 and the second side plate 34 of the cover member 3, and the reaction solution holding space 20 of the reaction vessel main body 2 is closed off. Here, as shown in Fig. 2(a), the convex component 27 provided to the third side plate 25 of the reaction vessel main body 2 fits into the concave component 36 provided to the second side plate 34 of the cover member 3, so that the cover member 3 is fixed to the reaction vessel main body 2, which makes the covering of the reaction vessel main body 2 by the cover member 3 more secure.

Also, when the cover member 3 is placed over the reaction vessel main body 2, as shown in Fig. 2(a), the abutting surface 28 provided to the top end of the first side plate 23 of the reaction vessel main body 2 strikes the bottom plate 32 of the cover member 3, which defines the location of the bottom plate 32 of the cover member 3 within the reaction solution holding space 20 (in this embodiment, the bottom plate 32 of the cover member 3 is limited so as not to come into contact with the bottom plate 22 of the reaction vessel main body 2), and forms a tightly closed space S1 between the bottom plate 22 of the reaction vessel main body 2 and the bottom plate 32 of the cover member 3. Also, when the cover member 3 is placed over the reaction vessel main body 2, as shown in Fig. 2(a), a tightly closed space S2 is formed between the second side plate 24 and the third side plate 25 of the reaction vessel main body 2, and the first side plate 33 of the cover member 3. The reaction solution is held in the tightly closed space S1 formed within the reaction solution holding space 20 when the cover member 3 is put in place, and any surplus reaction solution that will not be held in the tightly closed space S1 is held in the tightly closed space S2. At this point the reaction solution is pressed by the bottom plate 32 of the cover member 3, any air inside the reaction solution holding space 20, bubbles in the reaction solution, and so forth are pushed along with the reaction solution to the top part of the reaction solution holding space 20 and held in the tightly closed space S2, and part thereof is discharged from the opening 21 to outside the reaction solution holding space 20, which prevents the admixture of air into the tightly closed space S1 and the admixture of bubbles into the reaction solution held in the tightly closed space S1.

As shown in Fig. 1, the nozzle tip 4 pertaining to this embodiment has a disk-shaped distal end plate 43b constituting the distal end of the nozzle tip 4, a tapering first side plate 44 that rises up from the edges of the distal end plate 43 while gradually expanding in diameter, a cylindrical second side plate 45 that rises up from the top end of the first side plate 44 while maintaining the same diameter, a tapering third side plate 46 that rises up from the edges of the second side plate 45 while gradually expanding in diameter, a cylindrical fourth side plate 47 that rises up from the top end of the third side plate 46 while maintaining the same diameter, and a flange 48 provided to the top edges of the fourth side plate 47.

As shown in Fig. 1, an internal space 40 surrounded by the distal end plate 43 and the first to fourth side plates 44 to 47 is formed in the nozzle tip 4. A nozzle mounting hole 41 that leads to the internal space 40 is formed at the top end of the nozzle tip 4, and an intake and discharge hole 42 that leads to the nozzle mounting hole 41 through the internal space 40 is formed in the distal end plate 43 of the nozzle tip 4.

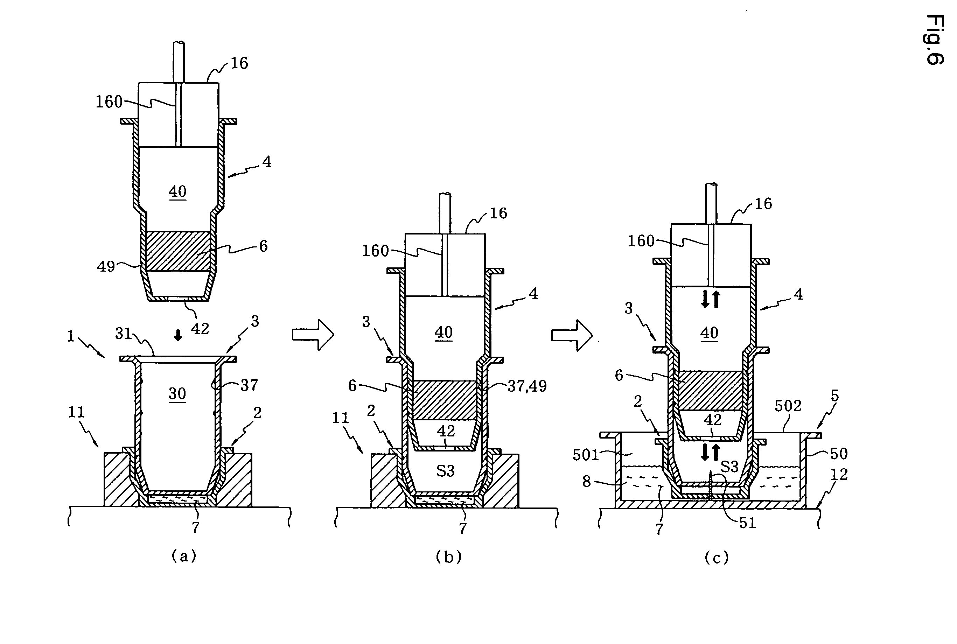

The nozzle tip 4 is designed so that a nozzle 16 can be mounted in the internal space 40 through the nozzle mounting hole 41 (see Fig. 6), and the intake and discharge forces produced by the nozzle 16 can be transmitted through the internal space 40 and the intake and discharge hole 42 to the outside of the nozzle tip 4.

As shown in Fig. 1, a filter 6 is provided in the internal space 40 of the nozzle tip 4. As shown in Fig. 1, the filter 6 is provided so as to be located near the intake and discharge hole 42, which prevents any spray of liquid from getting into the internal space 40 from the intake and discharge hole 42, and thereby preventing the contamination of the internal space 40.

The outside diameter of the second side plate 45 of the nozzle tip 4 is substantially the same as the inside diameter of the second side plate 34 of the cover member 3, and when the nozzle tip 4 is mounted in the nozzle tip fitting space 30 of the cover member 3, the outer peripheral surface of the second side plate 45 of the nozzle tip 4 fits snugly against the inner peripheral surface of the second side plate 34 of the cover member 3 (see Fig. 2(b)).

As shown in Fig. 1, the concave component 49 is provided on the outer peripheral surface of the second side plate 45 of the nozzle tip 4, and the concave component 49 fits with the convex component 37 provided on the inner peripheral surface of the second side plate 34 of the cover member 3 (see Fig. 2(b)).

When the nozzle tip 4 is mounted in the nozzle tip fitting space 30 of the cover member 3, as shown in Fig. 2(b), the inner peripheral surface of the second side plate 34 of the cover member 3 fits snugly against the outer peripheral surface of the second side plate 45 of the nozzle tip 4, the nozzle tip fitting hole 31 is sealed off by the distal end plate 43 and the first and second side plates 44 and 45 of the nozzle tip 4, and the nozzle tip fitting space 30 is closed off. The term "closed off" as used here means that there are no gaps, slits, or the like that would hinder the transmission of the intake force or discharge force of the nozzle 16 to the nozzle tip fitting space 30, and a state in which the nozzle tip fitting space 30 leads to the intake and discharge hole 42 of the nozzle tip 4 is encompassed by "closed off."

Also, when the nozzle tip 4 is mounted in the nozzle tip fitting space 30 of the cover member 3, as shown in Fig. 2(b), the convex component 37 provided to the second side plate 34 of the cover member 3 fits into the concave component 49 provided to the second side plate 45 of the nozzle tip 4, so that the nozzle tip 4 is fixed to the cover member 3, which makes the mounting of the nozzle tip 4 in the nozzle tip fitting space 30 more secure.

Also, when the nozzle tip 4 is mounted in the nozzle tip fitting space 30 of the cover member 3, as shown in Fig. 2(b), the abutting surface 38 provided to the top end of the second side plate 34 of the cover member 3 abuts against the' third side plate 46 of the nozzle tip 4, which defines the location of the distal end plate 43 of the nozzle tip 4 in the nozzle tip fitting space 30 (in this embodiment, the distal end plate 43 of the nozzle tip 4 is defined so as not to come into contact with the bottom plate 32 of the cover member 3 and seal off the intake and discharge hole 42 of the nozzle tip 4), and forms a tightly closed space S3 that leads to the intake and discharge hole 42 of the nozzle tip 4 between the bottom plate 32 of the cover member 3 and the distal end plate 43 of the nozzle tip 4. The tightly closed space S3 has no opening other than the intake and discharge hole 42 of the nozzle tip 4, so the intake and discharge forces produced by the nozzle 16 can be efficiently transmitted from the intake and discharge hole 42 of the nozzle tip 4 to the tightly closed space S3.

When the cover member 3 is mounted on the reaction vessel main body 2 and the nozzle tip 4 is mounted to the cover member 3, the tightly closed space S1, as shown in Fig. 2(b), has a contact surface with the bottom plate 22 of the reaction vessel main body 2, and also has a contact surface with the bottom plate 32 of the cover member 3. Also, as shown in Fig. 2(b), the tightly closed space S3 has a contact surface with the bottom plate 32 of the cover member 3. Therefore, the outside of the reaction vessel 1 can be made to communicate tightly closed space S1 and the tightly closed space S3 by forming a through-hole in the bottom plate 22 of the reaction vessel main body 2 and the bottom plate 32 of the cover member 3 with a puncture needle provided to the outside of the reaction vessel 1 (see Fig. 6(c)). At this point the bottom plate 32 of the cover member 3 is opposed against the deepest part of the tightly, closed space S1 (the bottom plate 22 of the reaction vessel main body 2 constituting the surface on which the reaction vessel 1 is placed), so a through-hole that communicates between the outside of the reaction vessel 1 and the tightly closed space S1 and the tightly closed space S3 can be formed in the bottom plate 22 of the reaction vessel main body 2 and the bottom plate 32 of the cover member 3 by a puncture needle (such as a puncture needle 51 provided to a puncture vessel 5) provided perpendicular or substantially perpendicular to the surface on which the reaction vessel 1 is placed (the lower surface of the bottom plate 22 of the reaction vessel main body 2) (see Fig. 6(c)).

Moreover, in the state with a cover member 3 mounted on a reaction vessel main body 2 and a nozzle tip 4 fitted to the cover member 3 as indicated in Fig. 2(b), a tightly closed space S2 has a contact surface with the second side plate 24 and the third side plate 25 of the reaction vessel main body 2, and has a contact surface with the first side plate 33 of the cover member 3. In addition, the tightly closed space S3 has a contact surface with the first side plate 33 of the cover member 3 as indicated in Fig. 2(b). Consequently, by using a puncture needle provided exterior to a reaction vessel 1 to form a through-hole to the second side plate 24 or third side plate 25 of the reaction vessel main body 2 and to the first side plate 33 of the cover member 3, the exterior of the reaction vessel 1, the tightly closed space S2 and the tightly closed space S3 can be connected.

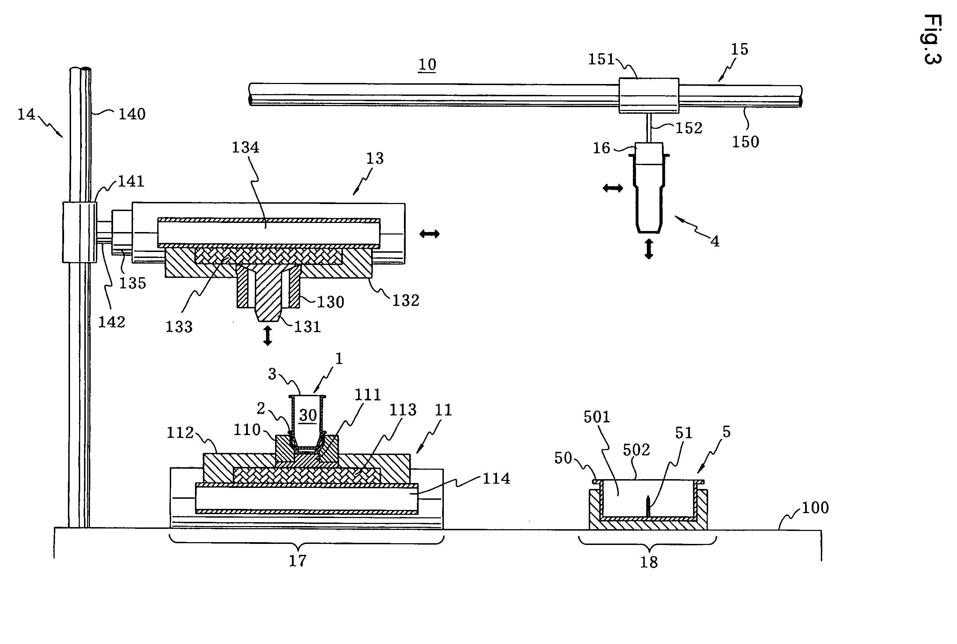

As shown in Fig. 3, the puncture vessel 5 pertaining to this embodiment comprises a main body 50 and the puncture needle 51. The main body 50 has a bottom plate that is quadrangular in plan view, a side plate in the form of an angular cylinder that rises up from the edges of the bottom plate, and a flange provided to the top edges of the side plate. A liquid holding space 501 surrounded by the bottom plate and-the side plate is formed in the main body 50, and an opening 502 that leads to the liquid holding space 501 is formed at the top end of the main body 50.

The liquid holding space 501 of the puncture vessel 5 is designed so that a liquid can be introduced through the opening 502, and so that the reaction vessel 1 can be accommodated (see Fig. 6(c)).

As shown in Fig. 3, the puncture needle 51 is provided so as to protrude from the bottom plate of the main body 50 into the liquid holding space 501 and so as to be substantially perpendicular to the surface on which the reaction vessel 1 is placed (the.upper surface of the bottom plate of the main body 50). When the reaction vessel 1, in which the cover member 3 is mounted on the reaction vessel main body 2, is placed in the liquid holding space 501; a through-hole can be formed in the bottom plate 22 of the reaction vessel main body 2 and the bottom plate 32 of the cover member 3 (see Fig. 6(c)).

As shown in Fig. 3, the distal end of the puncture needle 51 is pointed, and the puncture needle 51 is made of stainless steel or another such metal capable of puncturing the plastic, glass, or the like constituting the reaction vessel main body 2 and cover member 3.

As shown in Fig. 3, the reaction apparatus 10 pertaining to this embodiment comprises a reaction vessel installation part 17 in which the reaction vessel 1 is installed, a puncture vessel installation part 18 in which the puncture vessel 5 is installed, a nozzle 16 capable of taking up and discharging a liquid, a nozzle transfer part 15 that moves the nozzle 16 in a specific direction, a first temperature controller 11 provided to the reaction vessel installation part 17, a second temperature controller 13, and a temperature controller mounting and removing part 14 that moves the second temperature controller 13 in a specific direction.

As shown in Fig. 3, the reaction vessel installation part 17 and the puncture vessel installation part 18 are provided on a base 100, and a space in which the second temperature controller 13 and the nozzle 16 can move up, down, left, and right is provided above the base 100.

As shown in Fig. 3, the first temperature controller 11 is provided to the reaction vessel installation part 17, and the reaction vessel 1 is installed on the first temperature controller 11.

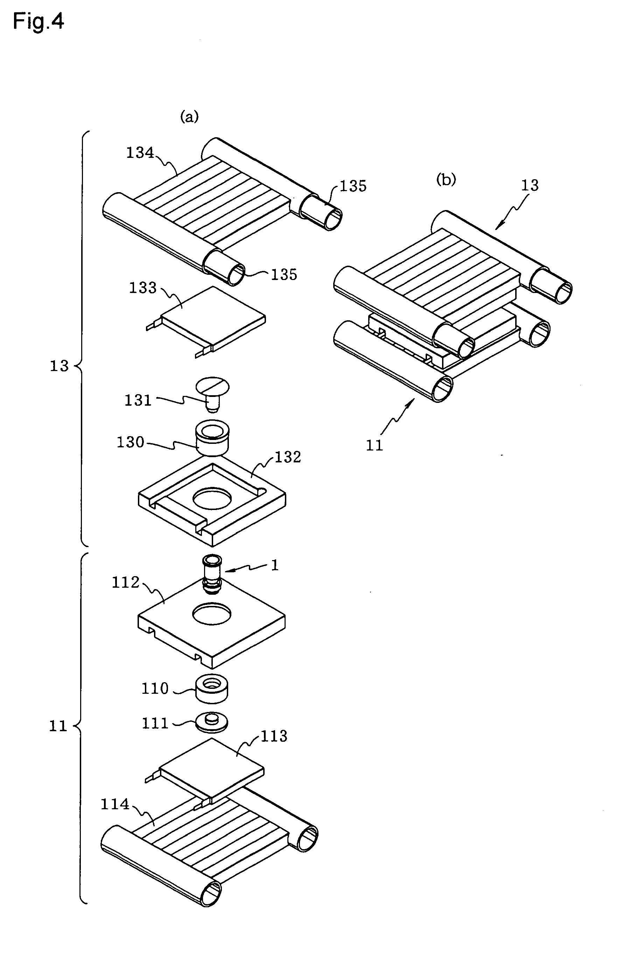

As shown in Figs. 3 to 5, the first temperature controller 11 comprises a heat-blocking ring 110, a heat conductor 111, a heat-blocking case 112, a thermoelectric semiconductor element 113, and a heat sink 114.

As shown in Figs. 3 to 5, a space is formed in the approximate center of the heat-blocking ring 110 so that the reaction vessel main body 2 can be introduced through an opening at the top, and so that the protrusion of the heat conductor 111 can be mounted through an opening at the bottom. The reaction vessel main body 2 held in this space is supported by the protrusion of the heat conductor 111 mounted in the space. The heat-blocking ring 110 is made from a ceramic or other heat-blocking material, and is designed to allow the efficient transfer of heat between the heat conductor 111 and the reaction vessel main body 2.

As shown in Figs. 3 to 5, the heat conductor 111 comprises a disk and a protrusion. The protrusion fits into the heat-blocking ring 110, while the disk comes into contact with the upper surface of the thermoelectric semiconductor element 113 provided on the heat sink 114. The heat conductor 111 is made of copper or another such metal, so any heat generated by the thermoelectric semiconductor element 113 can be efficiently transmitted to the reaction vessel main body 2.

The thermoelectric semiconductor element 113 is a type that can be utilized as a cooling element and/or as a heating element, an example of which is a Peltier element. The thermoelectric semiconductor element 113 is connected to a power source (not shown), and when power is supplied from this power source, the heat conductor 111 can be heated and/or cooled. As shown in Figs. 3 to 5, the lower surface of the thermoelectric semiconductor element 113 is in contact with the heat sink 114, which has cooling fins, and the thermoelectric semiconductor element 113 is forcibly cooled by the heat sink 114.

As shown in Figs. 3 to 5, the heat conductor 111 and the thermoelectric semiconductor element 113 are held inside the heat-blocking case 112, which is made of a ceramic or other heat-blocking material, so the heat conductor 111 can be efficiently cooled and/or heated by the thermoelectric semiconductor element 113.

The first temperature controller 11 transmits the heat applied to the heat conductor 111 by the thermoelectric semiconductor element 113 through the contact surface between the lower surface of the reaction vessel main body 2 and the protrusion of the heat conductor 111 to the reaction vessel main body 2, so that.the temperature of the reaction solution held in the reaction vessel 1 can be controlled.

As shown in Figs. 3 to 5, the second temperature controller 13 comprises a heat-blocking ring 130, a heat conductor 131, a heat-blocking case 132, a thermoelectric semiconductor element 133, a heat sink 134, and an arm attachment component 135 to which is attached an extending arm 142 of the.temperature controller mounting and removing part 14.

As shown in Figs. 3 to 5, a space is formed in the approximate center of the heat-blocking ring 130 in which the protrusion of the heat conductor 131 can be inserted through the opening on top, and the cover member 3 can be inserted through the opening on the bottom. The heat-blocking ring 130 is made from a ceramic or other heat-blocking material, and is designed to allow the efficient transfer of heat between the heat conductor 131 and the cover member 3.

As shown in Figs. 3 to 5, the heat conductor 131 comprises a disk and a protrusion. The protrusion is inserted into the heat-blocking ring 130, while the disk comes into contact with the lower surface of the thermoelectric semiconductor element 133. The protrusion of the heat conductor 131 is formed so that it can be mounted in the nozzle tip fitting space 30 of the cover member 3, and the protrusion of the heat conductor 131 mounted in.the nozzle tip fitting space 30 is in contact with the bottom plate 32, the first side plate 33, and the second side plate 34 of the cover member 3. The outside diameter of the protrusion of the heat conductor 131 is smaller than the inside diameter of the heat-blocking ring 130, and when the protrusion of the heat conductor 131 is inserted into the heat-blocking ring 130, a gap that leads to the bottom opening in the heat-blocking ring 130 is formed between the outer peripheral surface of the protrusion of the heat conductor 131 and the inner peripheral surface of the heat-blocking ring 130. The cover member 3 can be inserted into this gap, and even when the protrusion of the heat conductor 131 has been inserted into the heat-blocking ring 130, the protrusion of the heat conductor 131 can still be mounted in the nozzle tip fitting space 30 of the cover member 3. The heat conductor 131 is made of copper or another such metal, so any heat generated by the thermoelectric semiconductor element 133 can be efficiently transmitted to the cover member 3.

The thermoelectric semiconductor element 133 is a type that can be utilized as a cooling element and/or as a heating element, an example of which is a Peltier element. The thermoelectric semiconductor element 133 is connected to a power source (not shown), and when power is supplied from this power source, the heat conductor 131 can be heated and/or cooled. As shown in Figs. 3 to 5, the upper surface of the thermoelectric semiconductor element 133 is in contact with the heat sink 134, which has cooling fins, and the thermoelectric semiconductor element 131 is forcibly cooled by the heat sink 134.

As shown in Figs. 3 to 5, the heat conductor 131 and the thermoelectric semiconductor element 133 are held inside the heat-blocking case 132, which is made of a ceramic or other heat-blocking material, so the heat conductor 131 can be efficiently cooled and/or heated by the thermoelectric semiconductor element 133.

The second temperature controller 13 is designed so that when the protrusion of the heat conductor 131 is mounted in the nozzle tip fitting space 30 of the cover member 3, the heat applied to the heat conductor 131 by the thermoelectric semiconductor element 133 is transmitted through the contact surface between the protrusion of the heat conductor 111 and the bottom plate 32, the first side plate 33, and the second side plate 34 of the cover member 3, so that the temperature of the reaction solution held in the reaction vessel 1 can be controlled.

As shown in Fig. 3, the temperature controller mounting and removing part 14 comprises a rail 140 provided substantially perpendicular to the upper surface of the base 100, a movable component 141 that can move along the rail 140, and the extending arm 142 provided to the movable component 141.

As shown in Fig. 3, the extending arm 142 is provided to the movable component 141 so as.to be able of extend and retract horizontally with respect to the upper surface of the base 100. As shown in Fig. 3, the second temperature controller 13 is attached via the arm attachment component 135 to the distal end of the extending arm 142, and the second temperature controller 13 is moved horizontally with respect to the upper surface of the base 100 by the extension or retraction of the extending arm 142, and is moved vertically with respect to the upper surface of the base 100 by the movement of the movable component 141.

The temperature controller mounting and removing part 14 is designed so that the protrusion of the heat conductor 131 can be mounted in the nozzle tip fitting space 30 of the cover member 3 of the reaction vessel 1 placed on the first temperature controller 11, or.removed from the nozzle tip fitting space 30, by moving the second temperature controller 13 horizontally or vertically with respect to the upper surface of the base 100.

The nozzle 16 is connected to a liquid intake and discharge apparatus (not shown) and is designed so that a liquid can be taken up and discharged through an intake and discharge hole 160. The intake and discharge hole 160 leads to the distal end of the nozzle 16, and is designed so that intake force and discharge force can be transmitted to the nozzle tip 4 mounted at the distal end of the nozzle 16 through an O-ring or the like.

As shown in Fig. 3, the nozzle transfer part 15 comprises a rail 150 provided horizontally with respect to the upper surface of the base 100, a movable component 151 that can move along the rail 150, and an extending arm 152 provided to the movable component 151.

As shown in Fig. 3, the extending arm 152 is provided to the movable component 151 so as to be able of extend and retract vertically with respect to the upper surface of the base 100. As shown in Fig. 3, the nozzle 16 attached to the distal end of the extending arm 152 is moved vertically with respect to the upper surface of the base 100 by the extension or retraction of the extending arm 152, and is moved horizontally with respect to the upper surface of the base 100 by the movement of the movable component 151.

The nozzle transfer part 15 is designed so that the nozzle tip 4 mounted on the nozzle 16 can be mounted in the nozzle tip fitting space 30 of the cover member 3 of the reaction vessel 1 placed on the first temperature controller 11 by moving the nozzle 16 horizontally or vertically with respect to the upper surface of the 100. Further, the nozzle transfer part 15 is designed so that the reaction vessel 1 to which the nozzle tip 4 is mounted is moved to the puncture vessel installation part 18 and introduced through an opening 502 into a liquid holding space 501 of the puncture vessel 5 placed in the puncture vessel installation part 18, and a through-hole can be formed in the bottom plate 22 of the reaction vessel main body 2 and the bottom plate 32 of the cover member 3 by the puncture needle 51 provided to the puncture vessel 5.

Furthermore, the operation for the temperature controller mounting and removing part 14 and the operation for the nozzle transfer part 15 are controlled so as not to interfere with each other.

The operation for the reaction product extracting apparatus 10 will be described by using as an example a case in which a PCR reaction solution is held in the reaction vessel 1 and a PCR is conducted.

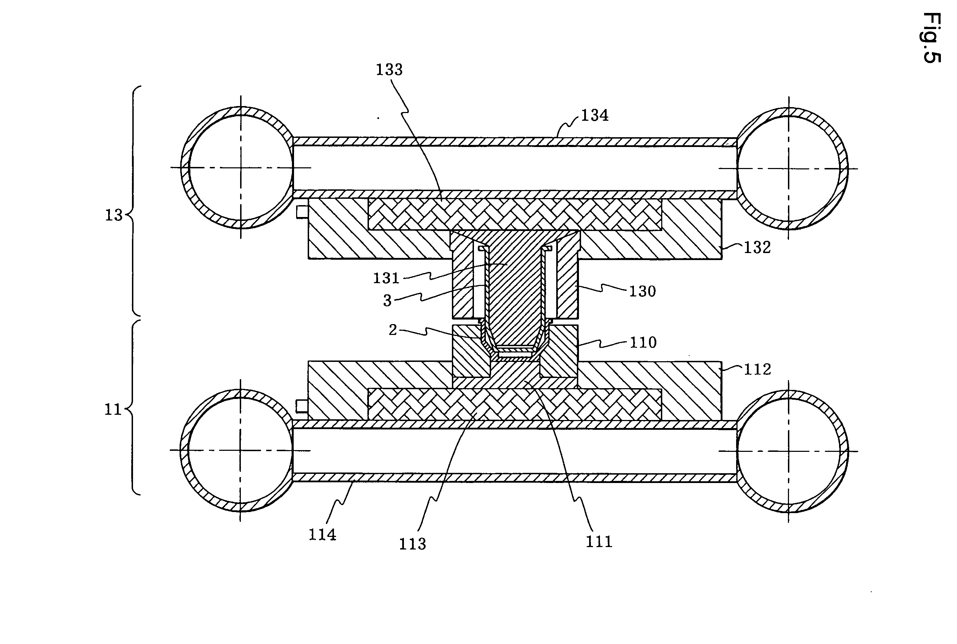

After the PCR reaction solution has been introduced through the opening 21 into the reaction solution holding space 20 of the reaction vessel main body 2, the cover member 3 is placed over the reaction vessel main body 2. At this point the convex component 27 of the reaction vessel main body 2 fits into the concave component 36 of the cover member 3, and the cover member 3 is fixed to the reaction vessel main body 2 (see Fig. 2). Also, the tightly closed space S1 and tightly closed space S2 are formed inside the reaction solution holding space 20 when the cover member 3 is put in place, so that the PCR reaction solution is held in the tightly closed space S1, and any surplus PCR reaction solution that will not be held in the tightly closed space S1 is held in the tightly closed space S2 (see Fig. 2). The reaction vessel 1 in this state is placed in the first temperature controller 11 provided to the reaction vessel installation part 17 (see Figs. 3 and 5).

The reaction product extracting apparatus 10 performs an operation in which the second temperature controller 13 is moved by the temperature controller mounting and removing part 14 to the reaction vessel 1 placed in the first temperature controller 11, and the protrusion of the heat conductor 131 of the second temperature controller 13 is mounted in the nozzle tip fitting space 30 of the cover member 3 (see Figs. 3 and 5).

The reaction product extracting apparatus 10 also performs an operation in which, after the protrusion of the heat conductor 131 has been mounted in the nozzle tip fitting space 30, the temperature of the PCR reaction solution held in the reaction vessel 1 is controlled by the first temperature controller 11 and the second temperature controller 13. As a result, the PCR proceeds in the PCR reaction solution held in the reaction vessel 1, and PCR amplified fragments 7 are produced as the reaction product in the PCR reaction solution (see Fig. 6(a)).

The reaction product extracting apparatus 10 performs an operation in which, after completion of the PCR, the second temperature controller 13 is moved by the temperature controller mounting and removing part 14, and the protrusion of the heat conductor 131 of the second temperature controller 13 is removed from the nozzle tip fitting space 30 of the cover member 3 (see Fig. 3).

The reaction product extracting apparatus 10 performs an operation in which, after the protrusion of the heat conductor 131 has been removed from the nozzle tip fitting space 30, the nozzle 16 is moved by the nozzle transfer part 15 to above the reaction vessel 1 placed in the first temperature controller 11, and the nozzle tip 4 mounted on the nozzle 16 is mounted in the nozzle tip fitting space 30 through the nozzle tip fitting hole 31 (see Fig. 6(i) and (b)). At this point the convex component 37 of the cover member 3 fits into the concave component 49 of the nozzle tip 4, fixing the nozzle tip 4 to the cover member 3. Also, the tightly closed space S3 that leads to the intake and discharge hole 42 of the nozzle tip 4 is formed inside the nozzle tip fitting space 30 by mounting the nozzle tip 4 in the nozzle tip fitting space 30.

The reaction product extracting apparatus 10 performs an operation in which, after the nozzle tip 4 mounted on the nozzle 16 has been mounted in the nozzle tip fitting space 30, the nozzle 16 is moved by the nozzle transfer part 15, and the reaction vessel 1 in which is placed the nozzle tip 4 mounted on the nozzle 16 is moved to above the puncture vessel installation part 18 (see Fig. 3). Since the cover member 3 is fixed to the reaction vessel main body 2, and the nozzle tip 4 is fixed to the cover member 3, the cover member 3 does not come out of the reaction vessel main body 2 during movement, nor does the nozzle tip 4 come out of the cover member 3.

The reaction product extracting apparatus 10 performs an operation in which, after the reaction vessel 1 has been moved to above the puncture vessel installation part 18, the extending arm 152 is extended, the reaction vessel 1 is introduced through the opening 502 into the liquid holding space 501 of the puncture vessel 5 placed in the puncture vessel installation part 18 (at this point, the lower surface of the bottom plate 22 of the reaction vessel main body 2 is pressed against the puncture needle 51 provided to the puncture vessel 5), and a through-hole that communicates between the liquid holding space 501 of the puncture vessel 5, the tightly closed space S1 of the reaction vessel 1, and the intake and discharge hole 42 of the nozzle tip 42 is formed in the bottom plate 22 of the reaction vessel main body 2 and the bottom plate 32 of the cover member 3 by the puncture needle 51 provided to the puncture vessel 5 (see Fig. 6(c)). At this point the puncture needle 51 punctures the bottom plate 22 of the reaction vessel main body 2, forming a through-hole that communicates between the liquid holding space 501 of the puncture vessel 5 and the tightly closed space S1 of the reaction vessel 1, and then punctures the bottom plate 32 of the cover member 3, forming a through-hole that communicates between the tightly closed space S1 of the reaction vessel 1 and the tightly closed space S3 inside the nozzle tip fitting space 30.

After the reaction vessel 1 has been punctured by the puncture needle 51, the liquid holding space 501 of the puncture vessel 5 communicates with the tightly closed space S1 of the reaction vessel 1 through the through-hole formed in the bottom plate 22 of the reaction vessel main body 2, and the tightly closed space S1 of the reaction vessel 1 communicates with the tightly closed space S3 inside the nozzle tip fitting space 30 through the through-hole formed in the bottom plate 32 of the cover member 3, and since the tightly closed space S3 inside the nozzle tip fitting space 30 leads to the intake and discharge hole 42 of the nozzle tip 4, the intake force and discharge force produced by the nozzle 16 can be transmitted to the liquid holding space 501 of the puncture vessel 5.

The reaction product extracting apparatus 10 performs an operation in which, after the puncture by the puncture needle 51, intake and discharge by the nozzle 16 are commenced, and a buffer 8 held in the liquid holding space 501 of the puncture vessel 5 is taken up and discharged through the above-mentioned through-holes, so that the PCR amplified fragments 7 contained in the PCR reaction solution in the tightly closed space S1 of the reaction vessel 1 are extracted into the buffer 8 (see Fig. 6(c)). At this point, when the intake and discharge by the nozzle 16 are commenced, the buffer 8 held in the liquid holding space 501 of the puncture vessel 5 flows into the tightly closed space S1 along with intake by the nozzle 16, and flows out of the tightly closed space S1 along with discharge by the nozzle 16. As the intake and discharge of the nozzle 16 are repeated over and over, this inflow of the buffer 8 to the tightly closed space S1 and outflow from the tightly closed space S1 is also repeated, so that the PCR amplified fragments 7 contained in the PCR reaction solution in the tightly closed space S1 of the reaction vessel 1 are extracted into the buffer 8 held in the liquid holding space 501 of the puncture vessel 5.

After a PCR has thus been conducted when the cover member 3 covering the reaction vessel main body 2, the PCR amplified fragments 7 contained in the PCR reaction solution in the tightly closed space S1 of the reaction vessel 1 can be acquired without removing the cover member 3 from the reaction vessel main body 2.

The embodiment described above was given in order to facilitate an understanding of the present invention, and does not limit the present invention in any way. Therefore, the various elements disclosed in the embodiment should be construed as encompassing all design modifications, equivalents, etc., within the technological scope of the present invention.

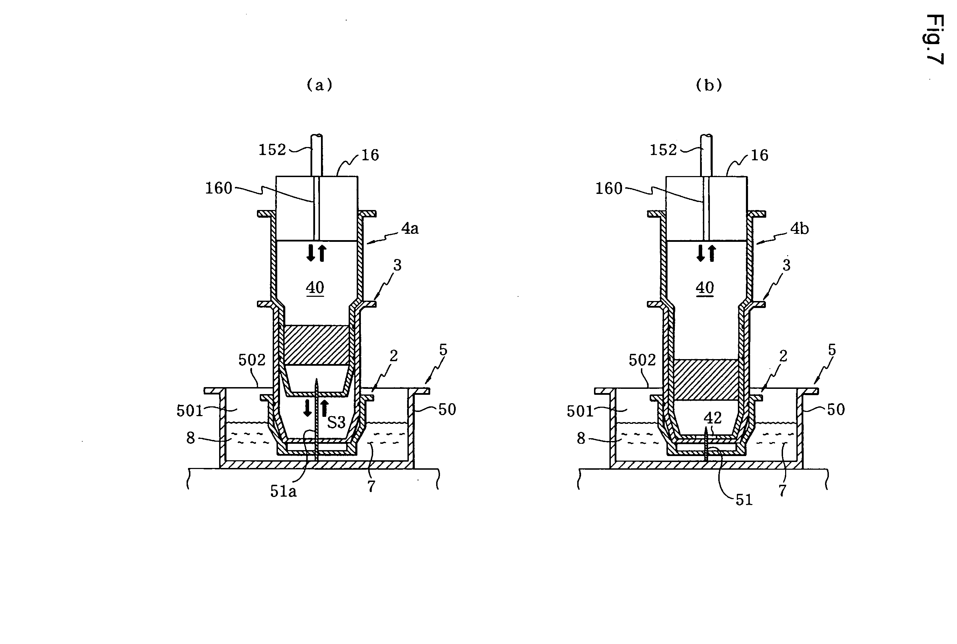

For example, as indicated in Fig. 7(a), a nozzle tip 4a with the intake and discharge hole 42 omitted can be used as the nozzle tip that is fitted to the nozzle tip fitting space 30. The nozzle tip 4a is such that the interior space 40 is tightly closed when the nozzle 16 is mounted on the nozzle mounting hole 41. When using the nozzle tip 4a as indicated in Fig. 7(a), after the nozzle tip 4a is fitted into the nozzle tip fitting space 30, a puncture needle 51a provided on a puncture vessel 5 forms in the bottom plate 22 of the reaction vessel main body 2, the bottom plate 32 of the cover member 3, and a tip plate of the nozzle tip 4 a through-hole communicating between a liquid holding space 501 of the puncture vessel 5, the tightly closed space S1 of the reaction vessel 1 and the interior space 40 of the nozzle tip 4. The length of the puncture needle 51a is adjusted so that the through-hole can be formed in the tip plate of the nozzle tip 4a fitted on the nozzle tip fitting space 30; and the length of the part that protrudes from the bottom plate 32 of the cover member 3 to the nozzle tip fitting space 30 is longer than the puncture needle 51. In the reaction vessel 1 in which the fitting of the nozzle tip 4a and the puncture hole by the puncture needle 51a are completed, the liquid holding space 501 of the puncture vessel 5 and the tightly closed space S1 of the reaction vessel 1 are connected through the through-hole formed in the bottom plate 22 of the reaction vessel main body 2; the tightly closed space S1 of the reaction vessel 1 and the tightly closed space S3 inside the nozzle tip fitting space 30 are connected through the through-hole formed in the bottom plate 32 of the cover member 3; and the tightly closed space S3 in the nozzle tip fitting space 30 and the interior space 40 of the nozzle tip 4a are connected through the through-hole formed in the nozzle tip 4a. Therefore, the intake force and discharge force by the nozzle 16 can be transmitted to the liquid holding space 501 of the puncture vessel 5. Consequently, as described above, by beginning the intake and discharge by the nozzle 16 mounted on the nozzle tip 4a and taking in and discharging the buffer 8 held in the liquid holding space 501 of the puncture vessel 5, the PCR amplified fragments 7 contained in a PCR reaction solution of the tightly sealed space S1 of the reaction vessel 1 are extracted into the buffer 8.

In addition, as indicated in Fig. 7(b), when fitted into the nozzle tip fitting space 30, a nozzle tip 4b may be used in which the intake and discharge hole 42 is tightly sealed by contacting the bottom plate 32 of the cover member 3. As indicated in Fig. 7(b), when using the nozzle tip 4b, after the nozzle tip 4b is fitted into the nozzle tip fitting space 30, the puncture needle 51 provided on the puncture vessel 5 forms in the bottom plate 22 of the reaction vessel main body 2 and the bottom wall part 32 of the cover member 3 a through-hole that causes the liquid holding space 501 of the puncture vessel 5 to communicate with the tightly closed space S1 of the reaction vessel 1, and the intake and discharge hole 42 of the nozzle tip 4. In the reaction vessel 1 in which the fitting of the nozzle tip 4b and the puncture by the puncture needle 51 are completed, the liquid holding space 501 of the puncture vessel 5 and the tightly closed space S1 of the reaction vessel 1 are connected through the through-hole formed in the bottom plate 22 of the reaction vessel main body 2; and the tightly closed space S1 of the reaction vessel 1 and the interior space 40 of the nozzle tip 4b are connected through the through-hole formed in the bottom plate 32 of the cover member. Therefore, the intake force and discharge force by the nozzle 16 can be transmitted to the liquid holding space 501 of the puncture vessel 5. Consequently, as described above, by beginning the intake and discharge by the nozzle 16 mounted on the nozzle tip 4b and taking in and discharging the buffer 8 held in the liquid holding space 501 of the puncture vessel 5, the PCR amplified fragments 7 contained in a PCR reaction solution of the tightly sealed space S1 of the reaction vessel 1 are extracted into the buffer 8.

When the reaction solution holding space 20 is closed off by covering the reaction vessel main body 2 with the cover member 3, the inner peripheral surface of the third side plate 25 of the reaction vessel main body 2 does not have to be in direct contact with the outer peripheral surface of the second side plate 34 of the cover member 3, and may instead have a member capable of maintaining a seal, such as an O-ring, interposed between these members. Similarly, when the nozzle tip fitting space 30 is closed by mounting the nozzle tip 4 in the nozzle tip fitting space 30 of the cover member 3, the inner peripheral surface of the second side plate 34 of the cover member 3 does not have to be in direct contact with the outer peripheral surface of the second side plate 45 of the nozzle tip 4, and may instead have a member capable of maintaining a seal, such as an O-ring, interposed between these members. Here, a gap, slit, or the like that communicates with the inside and outside of the reaction solution holding space 20 or of the nozzle tip fitting space 30 may be formed ahead of time in the O-ring or other member, so that any air inside the reaction solution holding space 20 or the nozzle tip fitting space 30 can be discharged to the outside when the reaction vessel main body 2 is covered with the cover member 3 or when the nozzle tip 4 is mounted in the nozzle tip fitting space 30. Also, a gap, slit, or the like that communicates with the inside and outside of the reaction solution holding space 20 or of the nozzle tip fitting space 30 may be formed ahead of time in the inner peripheral surface of the third side plate 25 of the reaction vessel main body 2 or the outer peripheral surface of the second side plate 34 of the cover member 3, or in the inner peripheral surface of the second side plate 34 of the cover member 3 or the outer peripheral surface of the second side plate 45 of the nozzle tip 4.

### INDUSTRIAL APPLICABILITY

According to the present invention, a reaction vessel and a reaction product extracting apparatus can be provided wherein, after conducting the reaction in the state:with the cover member mounted on the reaction vessel main body, the reaction product contained in the reaction solution within the reaction vessel can be acquired without removing the cover member from the reaction vessel main body. Moreover, the present invention can provide a nozzle tip and a puncture vessel that can be used when acquiring a reaction product contained in a reaction solution within a reaction vessel without removing the cover member from the reaction vessel main body.

## Claims

1. A reaction vessel comprising
a reaction vessel main body in which are formed a reaction solution holding space that can hold a reaction solution and an opening part leading to the reaction solution holding space, and
a cover member that can tightly close the reaction solution holding space by sealing the opening part,
wherein a nozzle tip fitting space in which can be fit a nozzle tip mounted on a nozzle capable of taking in and discharging liquid, is formed in the cover member,
a nozzle tip fitting hole leading to the nozzle tip fitting space is formed in the cover member so as to fit the nozzle tip in the nozzle tip fitting space in the state of the cover member being mounted on the reaction vessel main body, and
a through-hole that causes the exterior of the reaction vessel to communicate with the reaction solution holding space and the nozzle tip fitting space can be formed in the reaction vessel main body and the cover member by a puncture needle provided exterior to the reaction vessel in the state of the cover member being mounted on the reaction vessel main body.

2. The reaction vessel according to Claim 1, wherein the nozzle tip fitting space is formed such that the nozzle tip fitting space is tightly closed when the nozzle tip fitting hole is sealed.

3. The reaction vessel according to Claim 2, wherein the wall part of the cover member that forms the nozzle tip fitting space has an inner periphery surface that can fit snugly against the outer periphery surface of the nozzle tip.

4. The reaction vessel according to Claim 3, wherein a convex part and/or concave part that can fit with a concave part and/or convex part provided on the outer periphery surface of the nozzle tip is provided on the inner periphery surface of the wall part of the cover member that can fit snugly against the outer periphery surface of the nozzle tip.

5. The reaction vessel according to Claim 1, wherein the wall part of the cover member that forms the nozzle tip fitting space has a contact surface with the reaction solution holding space in the state of the cover member being mounted on the reaction vessel main body.

6. The reaction vessel according to Claim 5, wherein the wall part of the cover member that has a contact surface with the reaction solution holding space forms the deepest part of the nozzle tip fitting space.

7. The reaction vessel according to Claim 5 or 6,
wherein the wall part of the cover member that has a contact surface with the reaction solution holding space is provided opposite to the deepest part of the reaction solution holding space.

8. The reaction vessel according to Claim 1, wherein the nozzle tip fitting space is formed such that the direction of fitting the nozzle tip into the nozzle tip fitting space is perpendicular or substantially perpendicular to the plane on which the reaction vessel is placed.

9. The reaction vessel according to Claim 1, wherein the cover member has an outer periphery surface that can fit snugly against the inner periphery surface of the wall part of the reaction vessel main body that forms the reaction solution holding space.

10. The reaction vessel according to Claim 9,
wherein a concave part and/or convex part is provided on the inner periphery surface of the wall part of the reaction vessel main body that forms the reaction solution holding space, and
a convex part and/or concave part that can fit with the concave part and/or convex part provided on the inner periphery surface of the wall part of the reaction vessel main body is provided on the outer periphery surface of the cover member.

11. A nozzle tip that can be fitted into the nozzle tip fitting space of the reaction vessel according to Claim 1, in which are formed a nozzle mounting hole that can be mounted on a nozzle capable of taking in and discharging liquid, and an intake and discharge hole leading to the nozzle mounting hole,
wherein the intake and discharge hole is formed such that the intake and discharge hole is positioned in the nozzle tip fitting space in the state with the nozzle tip fitted into the nozzle tip fitting space.

12. The nozzle tip according to Claim 11, wherein a filter for preventing the infiltration of liquid from the intake and discharge hole into the interior is provided in the vicinity of the intake and discharge hole.

13. The nozzle tip according to Claim 11 or 12, comprising a contact part that contacts the cover member and defines the position of the intake and discharge hole in the nozzle tip fitting space.

14. A nozzle tip that can be fitted in the nozzle tip fitting space of the reaction vessel according to Claim 1, in which are formed a nozzle mounting hole that can be mounted on a nozzle capable of taking in and discharging liquid and an interior space leading to the nozzle mounting hole,
wherein the interior space is formed such that the interior space is tightly closed when the nozzle is mounted in the nozzle mounting hole, and
a through-hole that causes the exterior of the nozzle tip to communicate with the interior space can be formed by a puncture needle provided exterior to the nozzle tip.

15. The nozzle tip according to Claim 11 or 14, which can tightly close the nozzle tip fitting space by sealing the nozzle tip fitting hole.

16. The nozzle tip according to Claim 11 or 14, comprising an outer periphery surface that can fit snugly against the inner periphery surface of the wall part of the cover member that forms the nozzle tip fitting space.

17. The nozzle tip according to.Claim 16, wherein a convex part and/or concave part that can fit with the concave part and/or convex part provided on the inner periphery surface of the wall part of the cover member that forms the nozzle tip fitting space is provided on the outer periphery surface of the nozzle tip.

18. A puncture vessel comprising a liquid holding space that can hold liquid, an opening part leading to the liquid holding space, and a puncture needle,
wherein the liquid holding space is formed such that the reaction vessel according to Claim 1 can be held in the liquid holding space from the opening part, and
the puncture needle is provided to protrude from the wall part of the puncture vessel that forms the liquid holding space to the liquid holding space.

19. The puncture vessel according to Claim 18, wherein the puncture needle is provided perpendicularly or substantially perpendicularly to the plane on which the reaction vessel is placed.

20. A reaction product extracting apparatus comprising a reaction vessel installation part in which the reaction vessel according to Claim 1 is installed, a puncture vessel installation part in which the puncture vessel according to Claim 18 is installed, a nozzle capable of taking in and discharging liquid, and a nozzle transfer part,
wherein the nozzle transfer part conducts the operations of: fitting the nozzle tip according to Claim 11 mounted on the nozzle into the nozzle tip fitting space of the reaction vessel installed on the reaction vessel installation part; transferring the reaction vessel on which the nozzle tip is fitted to the puncture vessel installation part; and holding the reaction vessel in the liquid holding space of the puncture vessel installed on the puncture vessel installation part, and using the puncture needle provided on the puncture vessel to form in the cover member and the reaction vessel main body a through-hole communicating between the liquid holding space of the puncture vessel, the reaction solution holding space of the reaction vessel, and the intake and discharge hole of the nozzle tip; and
the nozzle conducts the operation of extracting a reaction product in the reaction vessel into a liquid held in the liquid holding space of the puncture vessel by taking in and discharging the liquid through the through-hole.

21. A reaction product extracting apparatus comprising a reaction vessel installation part in which the reaction vessel according Claim 1 is installed, a puncture vessel installation part in which the puncture vessel according to Claim 18 is installed, a nozzle capable of taking in and discharging liquid, and a nozzle transfer part,
wherein the nozzle transfer part conducts the operations of: fitting the nozzle tip according to Claim 14 mounted on the nozzle into the nozzle tip fitting space of the reaction vessel installed on the reaction vessel installation part;.transferring the reaction vessel on which the nozzle tip is fitted to the puncture vessel installation part; and holding the reaction vessel in the liquid holding space of the puncture vessel installed on the puncture vessel installation part, and using the puncture needle provided on the puncture vessel to form in the reaction vessel main body, the cover member and the nozzle tip a through-hole communicating between the liquid holding space of the puncture vessel, the reaction solution holding space of the reaction vessel, and the interior space of the nozzle tip; and
the nozzle conducts the operation of extracting a reaction product in the reaction vessel into a liquid held in the liquid holding space of the puncture vessel by taking in and discharging the liquid through the through-hole.

22. The reaction product extracting apparatus according to Claim 20 or 21, wherein a first temperature controller that can control the temperature of the reaction solution held in the reaction vessel installed on the reaction vessel installation part is provided on the reaction vessel installation part.

23. The reaction product extracting apparatus according to Claim 20 or 21, comprising a second temperature controller that is mounted in the nozzle tip fitting space in a mountable and removable manner and that can control the temperature of the reaction solution held in the reaction vessel installed in the reaction vessel installation part, and a temperature controller mounting and removing part that can mount/remove the second temperature controller in/from the nozzle tip fitting space,
wherein the temperature controller mounting and removing part conducts the operation of mounting the second temperature controller in the nozzle tip fitting space prior to the reaction, and the operation of removing the second temperature controller from the nozzle tip fitting space after the reaction.
